# EUROPEAN PATENT APPLICATION

(11) **EP 1 584 547 A2**
(43) Date of publication of application: **12.10.2005**
(21) Application number: 05102720.9
(22) Date of filing: 07.04.2005
(51) Int. Cl.: B62J 9/00, B62J 7/04

(54) **Support device for carriers and/or side bags for motor vehicles**

(30) Priority: 09.04.2004 IT MI20040713
(71) Applicant: PIAGGIO & C. S.p.A., 56025 Pontedera (Pisa) (IT)
(72) Inventor: Palla, Roberto, 56023 Cascina (Pisa) (IT)
(74) Representative: Coppo, Alessandro

(57) **Abstract**

Support device (1) for carriers and/or side bags for motor vehicles comprising at least one sleeve element (2) integral with the frame (10) of said motor vehicle (11) and at least one tubular element (3) connected to the rear light group (4) and able to slide inside the sleeve element (2) between a closed position, in which the tubular element (3) is at least partially contained inside the sleeve element (2), and an open position, in which the tubular element (3) is at least partially withdrawn from the sleeve element (2).

## Description

The present invention concerns a support device for carriers and/or side bags for motor vehicles and in particular for scooters.

In the field of two-wheeled vehicles, and in particular in the field of scooters, there are removable compartments suitable for housing baggage or other accessories. For such compartments, commonly known with the name carrier, the space at the back of the vehicle, situated behind the driver or, more precisely, behind the pillion passenger, tends to be exploited. Besides such compartments, in order to increase the load capacity, above all during long journeys, users of motor vehicles and scooters, above all those with high cylinder capacity, need to apply side bags to the vehicle.

To allow the installation both of carriers and of side bags, fixed frame support structures are applied to the vehicle. Such fixed frame structures allow the carrier and side bags to be removably fixed to the motor vehicle.

Such structures, although efficient, are bulky and always remain outside of the vehicle increasing the aerodynamic coefficient of the vehicle.

Moreover, when the rear carrier and/or the side bags are not applied, the frame structure remains dangerously and unattractively projecting out from the vehicle.

Vice-versa, when the rear carrier and/or side bags are applied, the rear light group and the numberplate are hidden from view, reducing visibility, above all at night, of the vehicle itself.

In light of the above, there is clearly a need to be able to have a support device for carriers and/or side bags, like the one according to the present invention, which allows the aerodynamic coefficient of the vehicle to be left practically unaltered with the carrier and side bags detached.

Therefore, the purpose of the present invention is that of solving the problems of the prior art by providing a support structure for carriers and/or side bags that allows good visibility of the rear light group and of the numberplate even with the carrier and side bags applied.

Another purpose of the present invention is that of providing a support structure for carriers and/or side bags that, with the carrier and side bags detached, does not project out dangerously and unattractively from the vehicle.

Another purpose of the present invention is that of providing a reliable and safe support structure that is at the same time easy to use and cost-effective to produce.

These and other purposes are accomplished by the support structure according to the present invention that has the characteristics of the attached claim 1.

Substantially, a support structure for carriers and/or side bags for motor vehicles according to the present invention is characterised in that it comprises at least one sleeve element integral with the frame of the motor vehicle and at least one tubular element connected to the rear light group and able to slide inside the sleeve element between a closed position, in which the tubular element is at least partially contained inside the sleeve, and an open position, in which the tubular element is at least partially withdrawn from the sleeve.

Further characteristics and advantages of the present invention shall become clearer from the following description, given for illustrative and not limiting purposes, with reference to the attached drawings, in which:
- figure 1 shows a left hand side view of a scooter or motor vehicle equipped with the support device according to the present invention, in closed position;
- figure 2 shows a left hand side view of a scooter or motor vehicle equipped with the support device according to the present invention, in open position;
- figure 3 shows a left hand side view of a scooter or motor vehicle equipped with the support device according to the present invention with a carrier and two side bags installed; and
- figure 4 shows a schematic side view of fastening means of a carrier to the support structure according to the present invention.

With reference to the figures, a scooter equipped with the support device 1 for carriers and/or side bags according to the present invention is shown.

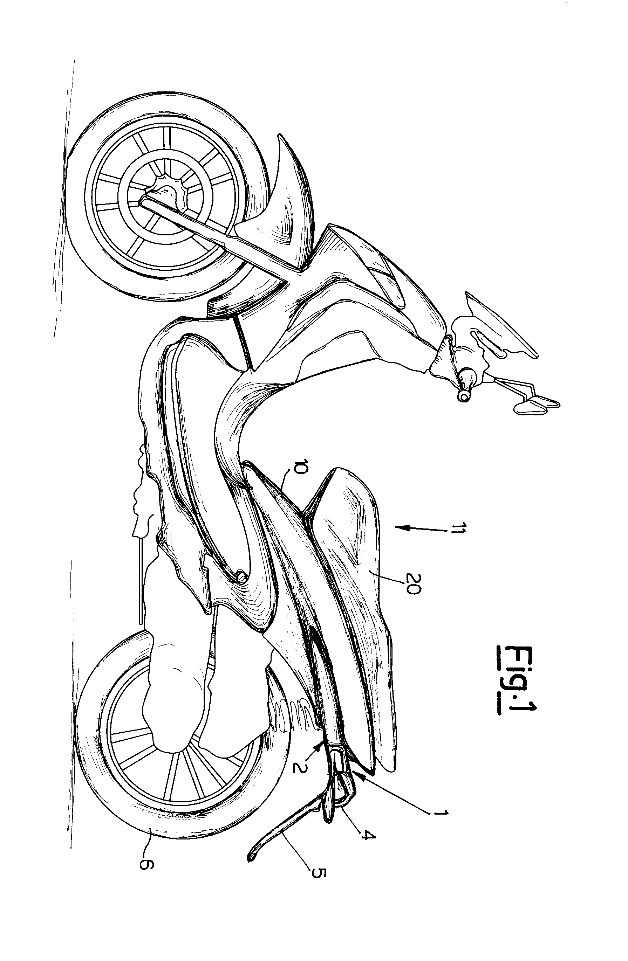

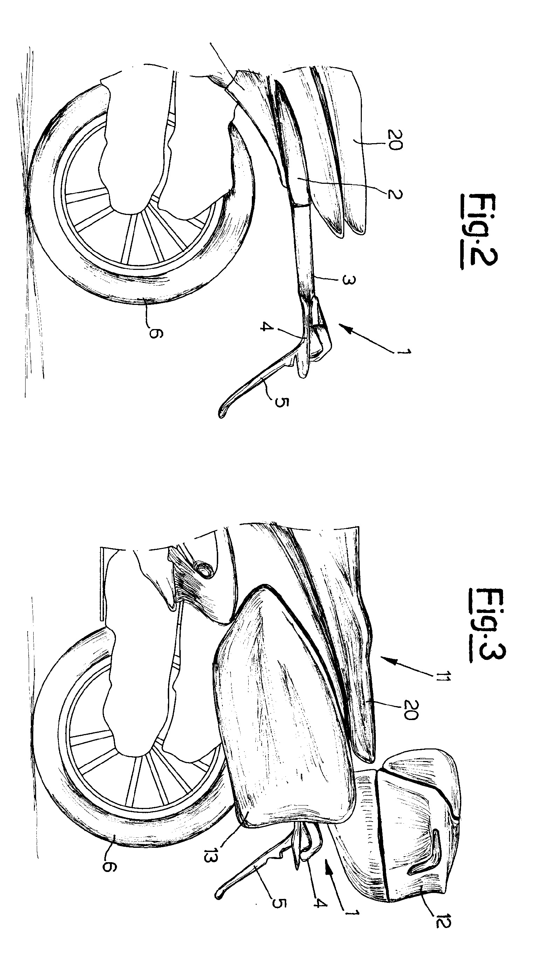

The support device 1, as shown in figures 1 and 2, comprises two sleeve elements 2, integral with the frame 10 of the motor vehicle 11 and two tubular elements 3, connected to the rear light group 4 and able to slide inside the sleeve elements 2.

The tubular elements 3 can slide inside the sleeve elements 2 between a closed position, in which the tubular elements 3 are at least partially contained inside the respective sleeve elements 2 (see figure 1), and an open position, in which the tubular elements 3 are at least partially withdrawn from the respective sleeve elements 2, as shown in figure 2.

In particular, the two sleeve elements 2 are arranged on the side of the motor vehicle 11, respectively below the saddle 20 and on opposite sides with respect to the rear wheel 6.

The tubular elements 3, as better shown in figure 2, support the rear light group 4 and the numberplate 5 of the motor vehicle 11.

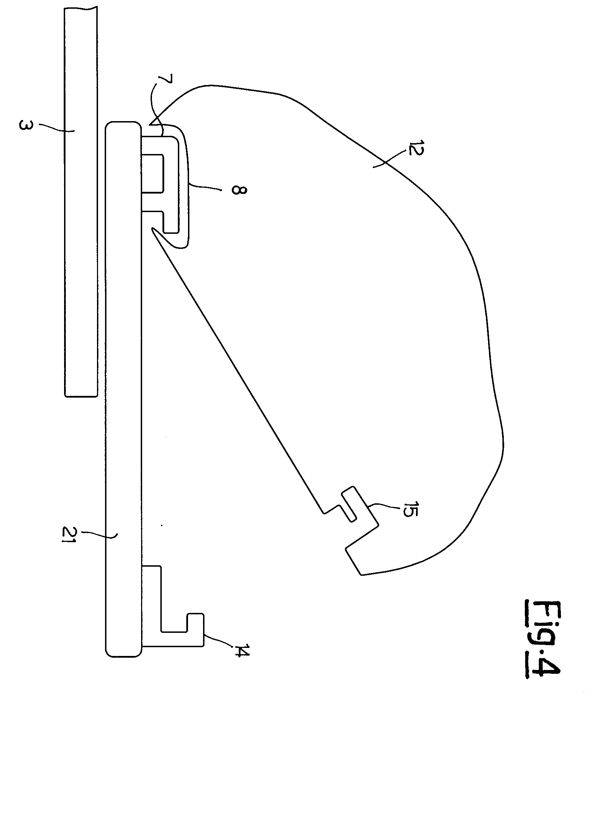

In open position, in other words with the tubular elements 3 withdrawn with respect to the sleeve elements 2, it is possible to install the carrier 12 and/or side bags 13 (see figure 3).

For such a purpose, the support device 1 has suitable removable fastening means 9.

In detail, at least one support plate 21 that can be fixed through known means, such as screws and bolts, to said device 1 in open configuration, and in particular to the tubular elements 3, is foreseen as fastening means 9 for the carrier 12.

The support plate 21, as can be seen in figure 4, has quick fasteners 7, which can engage in suitable corresponding recesses 8 made in the base of the carrier 12 and an attachment for a key lock 14 that can engage in a suitable recess 15 again foreseen on the base of the carrier 12 (see figure 4).

The attachment for a key lock 14 is a known attachment, normally used in the field, and foresees a key-operated lock suitable for preventing the attachment element 14 from being able to come out from the suitable recess 15 made in the base of the carrier 12.

Although in the present description a support plate 21 equipped with quick fasteners 7 and an attachment by key lock 14 have been shown as fastening means 9 of the carrier 12 to the support device 1, it is still possible to foresee alternative fastening means, such as magnetic plates, strips of Velcro, suitable belts or clamping elements, without departing from the scope of protection of the present invention.

The fastening means 9 of the carrier 12 to the support device 1 can, advantageously according to the present invention, have further safety or anti-theft elements. Such safety elements are known and widely available on the market and therefore shall not be described in greater detail.

On the other hand, hook elements (not shown), which can engage with fastener portions (not shown), foreseen on the side bags 13, are foreseen as fastening elements 9 for the side bags 13.

The aforementioned hook elements foresee clamping means at the end that can be fixed to the tubular elements 3, suitable for enclosing the tubular elements 3.

Further equivalent key locks, security devices or anti-theft elements can be foreseen between the hook elements and the fastener portions foreseen on the side bags 13.

Also in this case, although in the present description hook elements that can engage with corresponding fastener portions, foreseen on the side bags 13, have been shown as fastening means 9 for the side bags 13, it is still possible to foresee other alternative fastening means for the side bags 13, without departing from the scope of protection of the present invention.

In figure 3 the rear portion of a scooter 11 is shown equipped with the support device 1 according to the present invention with a carrier 12 and two side bags 13 (only one of which can be seen) installed.

Thanks to the present invention, as can be seen in figure 3, even with the side bags and carrier installed, the rear light group 4 and the numberplate are clearly visible.

The operation of the support device 1 according to the present invention is clear from that which has been outlined and in brief is the following.

When it is needed to install a carrier 12 and/or side bags 13 onto the vehicle 11, the two tubular elements 3 are withdrawn from the relative sleeves 2.

At this point, through known means, the removable fastening means 9 are fixed to the support device 1.

Finally, the removable fastening means 9 are engaged, in a known way, with the carrier 12 and the side bags 13.

In an alternative embodiment (not shown) the support device 1 has just one sleeve element 2 integral with the frame 10 of the motor vehicle 11 and just one tubular element 3 connected with the rear light group 4 and able to slide inside the sleeve element 2 between a closed position, in which the tubular element 3 is at least partially contained inside the sleeve element 2, and an open position, in which the tubular element 3 is at least partially withdrawn from the sleeve element 2.

The present invention has been described for illustrating, but not limiting purposes, according to its preferred embodiments, but it should be understood that variations and/or modifications can be brought by men skilled in the art without for this reason departing from the relative scope of protection, as defined by the attached claims.

## Claims

1. Support device (1) for carriers (12) and/or side bags (13) for motor vehicles (11) **characterised in that** it comprises at least one sleeve element (2) integral with the frame (10) of said motor vehicle (11) and at least one tubular element (3) connected to the rear light group (4) and able to slide inside said sleeve element (2) between a closed position, in which said tubular element is at least partially contained inside said sleeve element, and an open position, in which said tubular element (3) is at least partially withdrawn from said sleeve element (2).

2. Support device (1) according to claim 1, **characterised in that** it comprises at least two sleeve elements (2), arranged on opposite sides of the rear wheel (6) of said motor vehicle, and at least two tubular elements (3) connected to said rear light group (4) each able to slide in a sleeve element (2) between a closed position and an open position.

3. Support device (1) according to claim 1, **characterised in that** it comprises removable fastening means (9) for at least one carrier (12) and/or at least one side bag (13).

4. Support device (1) according to claim 3, **characterised in that** said fastening means (9) comprise at least one support plate (21), which can be fixed onto said at least one tubular element (3).

5. Support device (1) according to claim 4, **characterised in that** said support plate (21) comprises quick fasteners (7), able to engage in corresponding recesses (8) made in the base of the carrier (12), and an attachment for a key lock (14) able to engage in a corresponding recess (15) foreseen on the base of the carrier (12).

6. Support device (1) according to any one of claims 3 to 5, **characterised in that** said fastening means (9) comprise at least one anti-theft element.

7. Support device (1) according to any one of claims 3 to 5, **characterised in that** said removable fastening means (9) comprise hook elements, able to be fixed onto said at least one tubular element (3), and able to engage with corresponding fastener portions foreseen on said side bags (13).

8. Support device (1) according to claim 7, **characterised in that** said hook elements comprise clamps suitable for engaging said at least one tubular element (3).

9. Support device (1) according to any one of claims 7 to 8, **characterised in that** said hook elements comprise at least one anti-theft element.
